# EUROPEAN PATENT SPECIFICATION

(11) **EP 4 197 734 B1**
(45) Date of publication and mention of the grant of the patent: **27.05.2026**
(21) Application number: 22213400.9
(22) Date of filing: 14.12.2022
(51) Int. Cl.: B29B 17/02, B07B 7/08, B65B 59/00, B65B 69/00, B29B 17/00, B29L 31/00

(54) **APPARATUS FOR DEPACKAGING PACKED PRODUCTS**
VORRICHTUNG ZUM AUSPACKEN VON VERPACKTEN PRODUKTEN
APPAREIL POUR DÉSEMBALLER DES PRODUITS EMBALLÉS

(30) Priority: 15.12.2021 IT 202100031430
(43) Date of publication of application: 21.06.2023
(73) Proprietor: Tecnofer Ecoimpianti S.r.l., 45030 Ceneselli (RO) (IT)
(72) Inventor: GARBELLINI, Vito, 45030 Ceneselli (RO) (IT); GARBELLINI, Marinella, 45030 Ceneselli (RO) (IT)
(74) Representative: Braidotti, Andrea

(56) References cited:
- EP-A1- 0 534 623
- WO-A1-97/03883
- US-A1- 2018 369 828

## Description

### Field of the invention

The present invention relates to the field of unpacking, which is also known as depackaging.

The invention has been developed with particular regard for a compact apparatus for depackaging, which is suitable, for example, for retrieving production waste or food product returns, cosmetic product returns and other products, by means of separation of the packaging from the product which is contained.

### Technological background

There are known depackaging plants which are constructed by the same Applicant, wherein products of various types, for example, in the food sector, are separated from their packagings. This involves, for example, products which are already packaged but which are disposed of following a quality control before being marketed, or products which are withdrawn from the market as a result of returns or because they have reached the expiry date. At other times, the handling of these products could provide for the disposal thereof in landfill, which is not currently possible both for reasons of ecological sensitivity and as a result of the greatly increased costs for this type of non-differentiated disposal.

US2018/369828A1 discloses a process and apparatus for separating organics and inorganics from waste material with a specific object of preparing the separated organic fraction for the production of biogas or other methods for diverting organics from landfills. Waste material is subjected to a first separation treatment that separates organic and inorganic waste components. The apparatus includes a hopper to receive contaminated organic waste from different sources, a vertical separator that separates the inorganics from the organics by creating a vortex effect in a stationary filtration drum by which the solid contaminants (paper, plastic, metals) are blown in a spiral pattern upwards and removed from the top, while the organic fraction is removed from the bottom.

EP0534623A1 discloses an apparatus for reclaiming tobacco from cigarettes which has a cigarette pack opener in which the packs are conveyed by an endless conveyor along a path of travel having an arcuate portion and a linear portion. The packs are inputted to the conveyor at the arcuate portion where a pair of circular cutting knives are arranged to cut off the end panels of the pack. The packs are then conveyed to the linear portion of the path where pusher/squeeze bars are urged against the side panels of the pack to deform the pack and cause the cigarettes to fall from the pack by gravity into a collector. The empty pack is conveyed to another arcuate portion of the path where it is discarded.

In known depackaging plants of the same Applicant, the packaged products to be depackaged are introduced into a centrifugal separator which substantially comprises a cylinder which is provided with vanes which are mounted on the lateral surface thereof. The cylinder rotates inside a cylindrical jacket which is formed by mesh baskets. The packagings of the packaged product are progressively loaded in the centrifugal separator from an inlet which is placed at one end of the cylinder which provides for cutting them while it transports them towards the outlet at the other end of the cylinder, from which they are output in order to be collected in containers. From the cut packagings, the product is pushed out of the cylindrical jacket through the holes in the baskets and is collected under the centrifugal separator.

The known depackaging plants are designed each time to be adapted to the requirements in terms of space present in the establishments of the end users, for example, in the establishments dedicated to the production of packaged food products. The need to be integrated in these spaces and to be connected to the existing supply installations of the utilities which are necessary for operating the plant (water, electricity, compressed air) make the design and the construction of these plants complex, long and costly.

Not only is this reflected in the costs of the users who effectively decide to install a depackaging plant, but it also constitutes a barrier to the adoption of depackaging systems by the potential users who, while needing them, do not have the financial means or the necessary space to be provided with such a plant.

### Statement of invention

An object of the invention is to solve the problems of the prior art. Another object of the invention is to respond to the increasing requirements of the market by providing an apparatus which can readily be transported, is simple and rapid to install and which takes up little space once installed. Another object of the invention is to provide an apparatus which requires little maintenance or attention by the user. Another object of the invention is to provide an apparatus which is flexible and which can readily be adapted or modified for use in a wide number of application sectors.

Another object is to provide an apparatus which is reliable over time and with low handling costs.

These objects and other objects and advantages are achieved by the present invention as defined in the appended claims.

The invention is used in relation to a depackaging apparatus which is of the type indicated above and which is suitable for use in various sectors and in relation to products which are also of very different types. By way of non-limiting example, the depackaging apparatus described is suitable, though not exclusively, for depackaging liquid products (for example, milk, water, juices, drinks, shampoo), pasty products (for example, creams, gelatines, yoghurts, sauces, snack bars, confectionery products, ices, cosmetic products and the like) or powdered solid products (for example, flour, powdered detergent, etc.), granular solids (seeds, grains, etc.) or products which can be crumbled, such as, for example, flour-based food products (pasta, breadsticks, biscuits and so on), or in any case various products with packagings of various types, such as, for example, coffee capsules, medical capsules and cans generally (for example, canned meats, fish, sauces, soups, vegetables). Naturally, the sector in which the apparatus described is used is not limited to the sector described, the apparatus being able to be adapted to the most diverse requirements by adaptations and customizations which are within the competence of a person skilled in the art who has learned about the inventive concept and the relative technology from the present patent application.

According to the invention, there is described an apparatus for depackaging packaged products which comprises a support platform. The support platform supports the whole apparatus and allows the transport and installation thereof without any need for assembling the various components and members of the machine at the installation site. There is mounted on the support platform a centrifugal separator which is provided to tear the packagings of the packaged products, separating them from the products packaged therein. There is mounted on the support platform a supply system for supplying packaged products to the centrifugal separator.

There is mounted, still on the support platform, a removal system for removing the product depackaged by the centrifugal separator from the apparatus. There is mounted on the support platform a discharge system for discharging the packagings torn by the centrifugal separator.

A electric panel for instructing and controlling the apparatus is mounted on the support platform together with the relative electrical cables. The support platform can therefore generally support the entire apparatus in such a manner that it can be transported in an already assembled state to the installation site. The support platform further allows the apparatus to be put into operation rapidly and easily at the installation site because it is not necessary to disassemble the apparatus from the support platform which instead also carries thereon all the necessary wires for operating the apparatus. In order to operate the apparatus, therefore, it is simply necessary to supply it with an electrical source without any need for designing the layout of the depackaging installation beforehand, and without the need for specialist operators to intervene, for example, an electrician. The water and compressed air installations are also already integrated in the apparatus so that it is also not necessary for a plumber or any other specialist technician to intervene, it being sufficient to provide at the end user connections of the sources to the relative connection points on the apparatus.

According to the invention, the removal system for the depackaged product and/or the discharge system for the torn packagings comprise one discharge tube each which is movable from a transport position, in which the tube is contained within the shape of the support platform when viewed from above, to an operating position, in which it projects from the shape of the support platform when viewed from above. Thus, the apparatus can be in a compact configuration for the transport thereof, while in the operating position the discharge tubes can be open and project laterally with respect to the support platform in order to discharge the torn packagings and/or the depackaged product inside the containers which are suitable for the purpose and readily replaceable. According to a particular aspect, the discharge tube(s) is/are mounted for oscillation about a corresponding vertical axis, at least proximal to the vertical direction.

According to another aspect, the apparatus may comprise a water distributor group to which there can be connected washing pipes which serve to supply washing water to selected components of the apparatus. In particular, the apparatus can be arranged to carry out automatic washing cycles.

According to another aspect, the removal system may comprise at least one pump for removing a liquid depackaged product and at least one screw conveyor which is inserted in a discharge tube for removing solid, granular and/or pasty products. This ensures that the apparatus has substantial flexibility of use without it being necessary to modify or move the apparatus with respect to the initial defined position.

According to another aspect, the apparatus may comprise a single electrical energy inlet from an external source to the electric panel. The whole of the connections and internal wires can in fact be received in the support platform without it being necessary for a specialist electrician to intervene in order to operate the apparatus once it has arrived at the installation site. The water and compressed air installations are also provided on the apparatus in such a manner that it is simply necessary to connect the sources to the connection points provided without it being necessary for a plumbing technician to intervene.

According to another aspect, the support platform may be mounted on load cells. Advantageously, the load cells are arranged at the portion of the support platform where the supply system which supplies the packaged products to the centrifugal separator is located. It is thereby possible to carry out continuous verification of the processing operations carried out by the apparatus and it is therefore possible, for example, to give value to the packaged product being introduced by comparing the installation cost and operating cost of the apparatus with the costs which would be charged in order to dispose of the product in landfill. In other words, the user of the apparatus is able to carry out quantitative monitoring of the material being introduced and with this to monitor the control and the flow, for example, of the factory waste or rejects which are processed by means of the apparatus of the present invention.

According to another aspect, the supply system for supplying packaged products to the centrifugal separator may be a hopper. The hopper may be provided at the bottom thereof with a pair of screw conveyors with opposite helical flightings which provide both for transporting the packaged products to the centrifugal separator and for a first tearing of the packagings. For example, this is particularly advantageous if the products to be depackaged are further packaged in groups with a second packaging. The screw conveyors in the hopper initially tear the second packaging before the intervention of the centrifugal separator which separates the product from any individual packaging. Alternatively, the supply system may comprise a load transporter belt which, while also remaining inside the spatial requirement of the platform when viewed from above, may serve to load packaged products which require it. More generally, the selection of the most suitable supply system can be carried out during the design phase of each specific apparatus and may depend on evaluations which are mainly dictated by shape, dimensions and type of the packagings, the type of the product contained, the loading methods in batches or continuously, in accordance with the particular requirements of the end user, and/or the flow rates involved.

The apparatus set out above can be operated with a method according to which the entire apparatus is transported to the installation site in a single block, which is mounted on the support platform. The method provides for the support platform to be positioned at the predetermined site and at least one electrical source to be connected to the electric panel.

The operational start-up is rapid and does not require specialist operators.

If the apparatus is provided with one or more oscillating discharge tubes, the transport of the apparatus may comprise the preliminary step of arranging the discharge tube(s) in the transport position, in which it is contained within the shape of the support platform, when viewed from above, which is transported to the predetermined installation site. There, the discharge tube(s) can arranged in the operating position in which it/they project (s) from the shape of the support platform when viewed from above.

The apparatus is activated and controlled by means of an electronic control system which is mounted on-board the platform, for example, comprising an electronic processor which is preferably but not exclusively mounted in the instruction and control electric panel. The apparatus may provide a communication interface with the electronic system, for example, a touch screen or other display or data input devices of known type. There may be provided an operating software item, for example, loaded on the electronic control system which is on-board the apparatus and in which there are provided predetermined "recipes", that is to say, processing methods which allows the actuation of the apparatus in an optimized manner in accordance with the type of product and the packaging thereof being introduced. Each recipe determines the operational function of the members of the apparatus. During the operation of the apparatus controlled by such software, there is carried out a selection, which may be automatic or manual, of a recipe which controls optimized operations of the apparatus in accordance with the packaged product being introduced. The recipes can be selected as preferred from processing operations which are agreed beforehand with the end user of the apparatus. Preferably, the system can be arranged so as to be auto-configured for the processing method which is suitable for the product being introduced. This characteristic, besides facilitating the use for the operation of the apparatus, allows - particularly in association with the above-mentioned load cells - monitoring and tracking of the specific quantities of the groups of factory waste or rejects.

### Brief description of the drawings

Additional features and advantages will be appreciated form the following detailed description of a preferred embodiment with reference to the appended drawings which are given by way of non-limiting example and in which:
- Figure 1: is a perspective view of a compact apparatus for depackaging packaged products which involves the principle of the present invention;
- Figure 2: is a perspective view of the apparatus of Figure 1 according to a different angle;
- Figure 3: is an enlarged perspective view of a detail of the apparatus of Figures 1 and 2 which illustrates the articulated connection of a discharge pipe for the packagings which are separated from the products; and
- Figure 4: is an enlarged perspective view of another detail of the apparatus of Figures 1 and 2 which illustrates the articulated connection of a discharge pipe for the products which are separated from the packagings.

### Detailed description

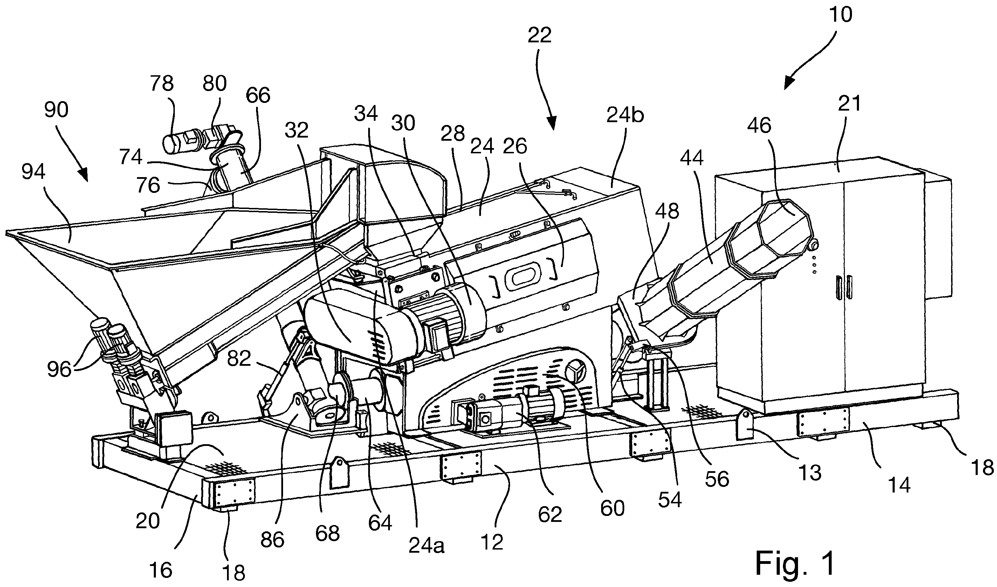

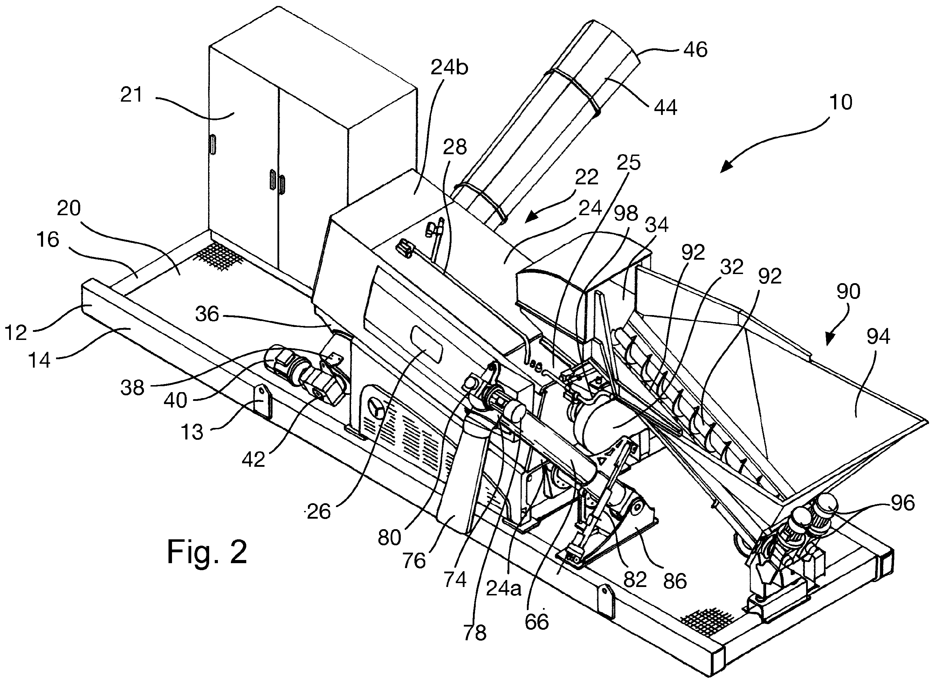

Now with reference to Figures 1 and 2, with reference number 10 it is indicated overall a compact apparatus for depackaging packaged products which involves the principle of the present invention. The apparatus comprises a support platform 12 which is preferably constructed with longitudinal members 14 which are fixed to transverse members 16. The support platform 12 can be supported on feet or supports 18 which can integrate load cells for continuously verifying the processing operations which are carried out by the apparatus 10. Preferably, the load cells are mounted at the feet or supports 18 at the inlet side of the packaged products, as will be set out more clearly below. The upper surface of the platform 12 is covered by a walkable plane 20 which can be constructed with a grid, which is preferably removable, for example, for inspection. The support platform 12 may have length and width dimensions which are compatible with the transport on standard means, for example, inside a 40-foot container or on a motorized lorry or a semitrailer type truck for road transport. At the sides of the support platform 12, there are fixed coupling brackets 13 for lifting the apparatus 10. Alternatively or additionally to the brackets 13, there may be provided coupling points which are integrated in the support platform, for example, anchoring points which can be incorporated in the longitudinal members 14 so as not to project beyond the dimension of the platform itself.

At one end of the support platform 12, there is mounted a cabinet 21 which houses the electric panel and generally the instruction and control instruments of the apparatus 10.

Advantageously, the electrical wires and the supply pipes for water and compressed air run under the grid 20 in order to reach the various components of the apparatus 10.

Approximately half-way across the support platform 12, there is mounted a centrifugal separator 22, the structure of which and the operation of which are generally known. The centrifugal separator 22 comprises a separation chamber 24 which is elongate and generally parallelepipedal. There are provided on the sides of the separation chamber 24 ports 26 which can be opened for inspection and maintenance and which are preferably at least partially made of a transparent material for visual inspection of the separation operations.

The end nozzles of pipes 28 which supply water inside the separation chamber 24 flow into the separation chamber 24.

The water is supplied by a distributor group 25 (see Figure 2) which is supplied by the water source which is provided at the installation site of the apparatus 10. The water which is supplied to the separation chamber 24 can promote the separation operations, for example, in the case of pasty products which require dilution and/or in order to carry out the cleaning and washing of the separation chamber 24 and the contents thereof, both for hygiene reasons and in order to prevent contaminations when it is necessary to change the type of packaged product to be depackaged. For the cleaning and sanitation of the separation chamber 24, as is the case more generally for the portions of the apparatus which need it, it is possible to provide for the introduction into the water circuit of a sanitizing solution for sanitizing the system.

As known and therefore not illustrated in detail in the Figures, a cylinder which is provided with vanes which are mounted on the lateral surface thereof is located inside the separation chamber 24. The cylinder rotates inside a cylindrical jacket which is formed by mesh baskets (not visible in the Figures) . The cylinder is driven in rotation by an electric motor 30 via transmission members which are protected by a crankcase 32. The transmission members may comprise, for example, a pulley and toothed belt transmission or a mechanical transmission with gears, such as, for example, of the type with an endless screw. The cylinder rotates about an axis which is inclined with respect to the horizontal plane of the support platform 12. The inclination is preferably less than 45° with respect to the horizontal plane. The separation chamber 24 is therefore lower at one side 24a than at the other side 24b. The product to be depackaged is introduced into the separation chamber 24 through an inlet opening 34 in the upper portion of the separation chamber 24, in the immediate vicinity of the lowest side 24a thereof. The packagings torn by the centrifugal separator 22 are discharged from an outlet opening 36 (see Figure 2) in the lower portion of the separation chamber 24, in the immediate vicinity of the highest side 24b thereof.

The outlet opening 36 communicates with a discharge pipe 38 which is inclined upwards and which is arranged transversely with respect to the axis of the separation chamber 24 in order to discharge the torn packagings at the side with respect to the mainly longitudinal development of the apparatus 10 on the support platform 12. A screw conveyor (not visible in the Figure) is mounted inside the discharge pipe 38 in a rotatable manner for discharging the torn packagings. The screw conveyor is driven in rotation by a motor 40 via transmission members 42, for example, a worm screw reduction gear or other generally known systems. The discharge pipe 38 communicates with a discharge tube 44 which preferably but in a non-limiting manner has an octagonal section and which widens progressively towards an outlet opening 46, which is positioned, when the apparatus 10 is being used, at such a height as to allow to position under it a collection container for the torn packagings being discharged from the apparatus 10. The height of the outlet opening 46 may be, for example, no less than approximately two metres.

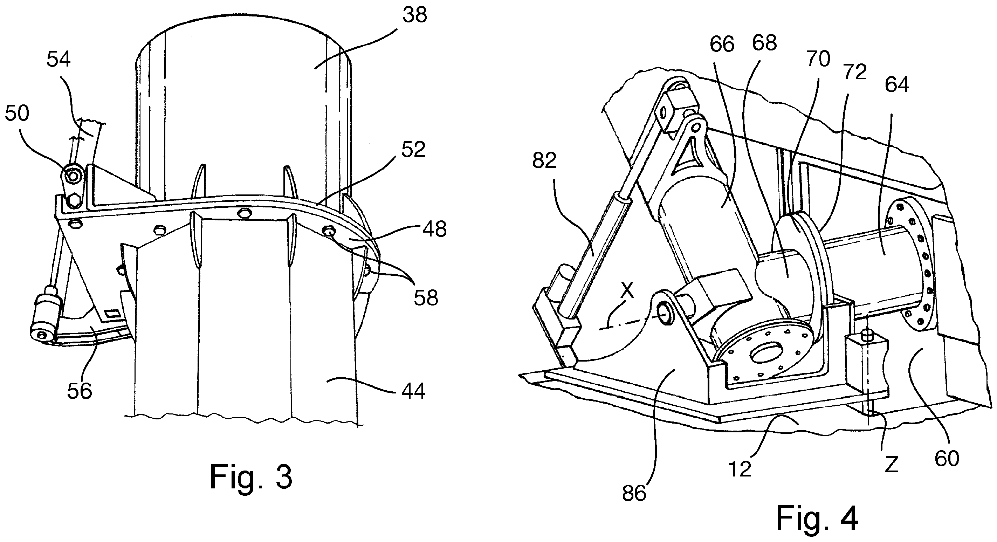

The discharge pipe 44 is mounted in a cantilevered manner on an end flange 48 which is articulated with respect to the discharge pipe 38 by means of a hinge 50. In particular, the end flange 48 at the side of the tube 44 is mounted in an oscillating manner with respect to a corresponding end flange 52 which is fixed to the end of the discharge pipe 38, as can be seen in Figure 3. The articulation hinge 50 between the two flanges allows orientation of the discharge tube 44 in a longitudinal direction with respect to the development of the support platform 12, thereby being moved near the centrifugal separator 22 in such a manner as to reduce the lateral spatial requirement of the apparatus 10, for example, during the transport thereof to the installation site. A jack 54 which is connected to an arm 56 which projects from the end flange 48 allows the discharge tube 44 to be manoeuvred and orientated from the most compact longitudinal transport position, in a state brought near the centrifugal separator 22, to the extended transverse working position, in which the discharge tube 44 is aligned with the discharge pipe 38.

In the transverse working position, the end flanges 48, 50 are brought close together and are secured together, for example, by means of bolts 58 or other functionally similar means.

There is arranged under the separation chamber 24 a collection tank 60 for the product which is depackaged by means of the centrifugal separator 22. The collection tank 60 is preferably in the form of a hopper, with side walls which converge towards a bottom zone towards which the depackaged product is conveyed. A pump 62 is provided to remove where applicable a liquid product from the bottom of the collection tank 60. At the bottom of the collection tank 60, a screw conveyor (not visible in the Figures) which is used if the depackaged product cannot be removed by the pump 62 is mounted in a rotatable manner, for example, in the case of a very pasty product or granular product. In this case, the screw conveyor at the bottom of the collection tank 60 pushes the product inside a discharge sleeve 64 which projects, preferably in a horizontal direction, from the collection tank 60. The discharge sleeve 64 communicates with a discharge tube 66 of the depackaged product.

The discharge tube 66 has a transverse tubular inlet 68 which communicates with the discharge tube 64. The discharge tube 64 develops in a rising manner in a state inclined up to an upper discharge end 74 which communicates with a discharge spout 76 for the depackaged product. Under the discharge spout 76 , there may be positioned a collection container for the depackaged product being discharged from the apparatus 10. There is mounted on the head of the discharge tube 66 a motor 78 which is connected via a transmission 80 to a screw conveyor (not illustrated) which is positioned inside the discharge tube 66 which allows the depackaged product to be transferred from the transverse tubular inlet 68 up to the top of the discharge tube 66 in order to discharge it via the discharge spout 76. The inclination of the discharge tube 66 can be regulated by means of a jack 82. To this end, as can also be seen in greater detail in Figure 4, the discharge tube 66 is articulated near the transverse tubular inlet 68 so as to rotate about an axis X which is substantially horizontal and which coincides with the axis of the transverse tubular inlet 68 and which preferably also coincides with the axis of the discharge sleeve 64. The transverse tubular inlet 68 is provided with a flange 70 which abuts in a sealing manner against a corresponding flange 72 of the discharge sleeve 64.

As can clearly be seen in Figure 4, the discharge tube 66 is mounted, together with the jack 82, on a base 86 which is mounted in an oscillating manner about an axis Z which is substantially vertical with respect to the support platform 12. The rotation of the base 86 about the axis Z allows the discharge tube 66 to be orientated in a longitudinal direction with respect to the development of the support platform 12 so as to also reduce in this case, as for the discharge tube 44 described above, the lateral spatial requirement of the apparatus 10, for example, during the transport thereof to the installation site. In the transverse working position of the discharge tube 44, the flanges 70, 72 are placed beside each other and can be secured together after the inclination of the discharge tube 44 has been adjusted by means of the jack 82.

The centrifugal separator is supplied with the product to be depackaged which is transported towards the inlet opening 34 by means of a loading system 90. The exemplary loading system of the Figures comprises a conveyor which is formed by two screw conveyors 92 which are beside each other with opposing helical flightings, and which are arranged at the bottom of a hopper 94 with inclined walls in order to form a type of funnel. The screw conveyors 92 are actuated by respective motors 96 and can contribute to a first fragmentation of the packaging of the products to be depackaged. The end pipe nozzles 98 which supply water for cleaning the hopper 96 and the screw conveyors 92 flow into the hopper 96. The water is supplied also in this case by the distributor group 25, in which the water source which is connected to the apparatus arrives. Naturally, the circulation of the water in the apparatus 10 is provided by one or more pumps and it is regulated via one or more valves which are pneumatically or electrically controlled.

The loading system for the products to be depackaged may also be of a different type from that illustrated in the Figures and may comprise a single screw conveyor or a transporter belt or a system with cups or another system of a generally known type in the field of movement of packaged products.

The apparatus 10 is arranged at the production site, mounting on the support platform 12 all the components which can be customized in accordance with the final intended use of the apparatus. In particular, the loading system of the products may be selected suitably for the type of packagings to be loaded in the centrifugal separator 22. The centrifugal separator 22 is customized in accordance with the product to be depackaged, for example, by selecting the vanes of the cylinder which have already been adapted for the purpose, as well as the mesh baskets which are most suitable for allowing the product to pass, at the same time preventing the passage of the torn packagings which are instead transported towards the outlet at the end of the centrifugal separator opposite the inlet opening.

There can also be supplied to the apparatus 10 a compressed air source which serves to actuate the pneumatic control valves for various components of the apparatus 10. Alternatively or additionally to an external supply of compressed air, there may be provision for the installation of an air compressor which is mounted on the apparatus 10, preferably on the support platform 12, in order to produce all or some of the compressed air necessary for actuating the pneumatic valves.

The apparatus 10 comprises an electronic control system which allows predetermined depackaging operations to be programmed in accordance with the product being introduced. Merely by way of example, it is possible to provide for different depackaging operations for different types of packaged pasta in accordance with whether it is dry pasta or filled pasta, and also in accordance with the type of packaging to be torn. It is possible to modify the operating speed parameters of the centrifugal separator, the various screw conveyors and it is possible to programme the working cycles by alternating them with cleaning and washing cycles. The apparatus can be provided with sensors which report to the electronic control system various information relating to the operation of the mechanical members, the pressures involved and any other useful information relating to the control of the depackaging process. The apparatus is generally autonomous, apart from the connection to the electrical source and, where provided and necessary, the water source and/or compressed air source. The support platform allows all the wires and the electric panel to be received. The end user is able to decide on the positioning which he/she prefers for the support platform, therefore determining the preferred zone for the installation of the apparatus. The electronic control system comprises, for example, an electronic processor which is mounted on the support platform 12, preferably but not exclusively in the instruction and control electric panel 21. The apparatus 10 may provide for a communication interface with the electronic control system, for example, a touch screen or other display and data input devices of known type (keypad, mouse, button panel, etc.). The control software of the apparatus can be provided so as to actuate a selection between a predetermined and preset number of recipes, that is to say, processing methods which allow the apparatus to be actuated in an optimized manner in accordance with the type of product and the packaging thereof being introduced, as preferred from processing operations which are agreed beforehand with the end user of the apparatus. Preferably, the system can be provided so as to be auto-configured for the processing method which is suitable for the product being introduced. This characteristic, besides facilitating the use for the operation of the apparatus, allows - particularly in association with the load cells - the specific quantities of the groups of factory waste or rejects to be monitored and tracked.

The fact that the apparatus is completely supported on the support platform 12 further allows it to be repositioned readily in another location if desired or necessary. To this end, and for any transport requirement, it is particularly advantageous to make the structure of the apparatus compact so that it is contained within the area defined by the support platform when viewed from above. To this end, it is possible to turn the discharge tubes 44, 66 of the torn packagings and the depackaged product, respectively, orientating them parallel with the centrifugal separator 22.

The overall shape of the apparatus 10 is thereby able to be contained within the useful dimensions, for example, of a 40-foot container, which is usually used for rail or sea transport, or the dimensions which are suitable for road transport by means, for example, of a motorized lorry or semitrailer type truck.

Advantageously, at least the discharge tube 44 of the torn packagings can be made from plastics or composite material, for example, fibreglass, in order to make it lighter and thereby to limit the bending moment resulting from the fact that it projects in a cantilevered manner over a substantial portion outside the support platform.

Using the sensors, for example, the load cells which are integrated in the feet of the support platform or in any case which are placed under the apparatus 10, in particular at the inlet side of the packaged products, it is possible to continuously verify the processing operations carried out. In this manner, for example, it is possible to evaluate the product which is depackaged and to verify the saving obtained with respect to the alternative of disposal in landfill. The monitoring of the apparatus is provided to comply with the requirements of the industry 4.0. Naturally, the apparatus can be provided for the data link in a remote manner, for example, by means of wired connection or wireless connection.

The apparatus is suitable for customizations in accordance with the methods for use at the end user. Furthermore, the apparatus is suitable for depackaging products which are contained in a plurality of layers of packaging, for example, but in a non-limiting manner, two or three layers, such as, for example, boxes of products which are packaged individually inside multiple packagings.

Naturally, the principle of the invention remaining the same, the embodiments and details of construction may be varied widely with respect to those described and illustrated without thereby departing from the scope of the present invention, which is defined by the appended claims.

## Claims

1. An apparatus for depackaging packaged products, comprising a support platform (12) on which there is mounted a centrifugal separator (22) which is configured to tear the packagings of the packaged products, separating them from the products packaged therein, there further being mounted on the support platform:
- a supply system (90) for supplying packaged products to the centrifugal separator (22),
- a removal system (62; 64, 66, 76) for removing from the apparatus the product depackaged by means of the centrifugal separator (22)
- a discharge system (38, 44) for discharging from the apparatus the packagings torn by the centrifugal separator (22),
- an electric panel (21) for instructing and controlling the apparatus (10) with relative electrical cables,
wherein the support platform (12) wholly supports the apparatus for the transport thereof and the operation at an installation site, wherein the removal system for the depackaged product and/or the discharge system for the torn packagings comprise(s) a discharge tube(s) (44, 66) which is/are movable from a transport position, in which the tube(s) is/are contained within the shape of the support platform when viewed from above, to an operating position, in which it/ they project(s) from the shape of the support platform (12) when viewed from above.

2. An apparatus according to claim 1, wherein the discharge tube(s) (44, 66) is/are mounted for oscillation about a corresponding vertical axis (Z) or proximal to the vertical direction.

3. An apparatus according to claim 1 or claim 2, comprising a water distributor group (25), washing pipes (28, 98) being connected to the distributor group in order to supply washing water to selected components of the apparatus (10).

4. An apparatus according to any one of claims 1 to 3, wherein the removal system (62; 64, 66, 76) for the product which is depackaged by the centrifugal separator (22) comprises at least one pump for removing a liquid depackaged product and at least one screw conveyor which is inserted in a discharge tube (66) for removing solid, granular and/or pasty products.

5. An apparatus according to any one of claims 1 to 4, comprising a single electrical energy inlet from an external source to the electric panel (21), the whole of the connections and internal wires being placed on the support platform (12).

6. An apparatus according to any one of claims 1 to 5, wherein the support platform (12) is mounted on load cells (18), preferably at the entry side for the packaged products to be depackaged.

7. An apparatus according to any one of claims 1 to 6, wherein the supply system (90) for supplying packaged products to the centrifugal separator (22) is a hopper (94) which is provided at the bottom with a pair of screw conveyors (92) with opposite helical flightings which provide both for transporting the packaged products to the centrifugal separator (22) and for a first tearing of the packagings.

8. A method for operating an apparatus according to any one of claims 1 to 7, comprising the steps of transporting the entire apparatus (10) to the installation site in a single block, which is mounted on the support platform (12), positioning the support platform at the predetermined site, connecting at least one electrical source to the electric panel (21), wherein the transport of the apparatus (10) comprises the preliminary step of arranging the discharge tube(s) (44, 66) in the transport position, in which it is/they are contained within the shape of the support platform when viewed from above, and the subsequent step of arranging, at the predetermined installation site, the discharge tube(s) in the operating position in which it/they project (s) from the shape of the support platform (12) when viewed from above.

9. A method for controlling and instructing an apparatus according to any one of claims 1 to 7, comprising an electronic control system in which there is loaded an operating software which is configured to instruct and control the apparatus, wherein there are provided predetermined operation recipes, each of which determines the operational function of the members of the apparatus, the method comprising the step of selection, which is automatic or manual, of an operation recipe which instructs optimized operations of the apparatus in accordance with the type of packaged product being introduced.

## Patentansprüche

1. Vorrichtung zum Auspacken von verpackten Produkten, die eine Trägerplattform (12) umfasst, auf der ein Zentrifugaltrenner (22) montiert ist, der konfiguriert ist, um die Verpackungen der verpackten Produkte aufzureißen und sie von den darin verpackten Produkten zu trennen, wobei ferner Folgendes auf der Trägerplattform montiert ist:
- ein Zufuhrsystem (90) zum Zuführen verpackter Produkte zum Zentrifugaltrenner (22),
- ein Entnahmesystem (62; 64, 66, 76) zum Entnehmen des mittels des Zentrifugaltrenners (22) ausgepackten Produkts aus der Vorrichtung
- ein Entladesystem (38, 44) zum Entladen der durch den Zentrifugaltrenner (22) aufgerissenen Verpackungen aus der Vorrichtung,
- eine elektrische Schalttafel (21) zum Anweisen und Steuern der Vorrichtung (10) mit relativen elektrischen Kabeln,
wobei die Trägerplattform (12) die Vorrichtung für deren Transport und den Betrieb an einem Installationsort vollständig abstützt, wobei das Entnahmesystem für das ausgepackte Produkt und/oder das Entladesystem für die aufgerissenen Verpackungen ein oder mehrere Entladungsrohr(e) (44, 66) umfasst(umfassen), das/die von einer Transportposition, in der das/die Rohr(e) innerhalb der Form der Trägerplattform, wenn von oben betrachtet, enthalten ist/sind, in eine Betriebsposition bewegbar ist/sind, in der es/sie aus der Form der Trägerplattform (12), wenn von oben betrachtet, hervorsteht/hervorstehen.

2. Vorrichtung nach Anspruch 1, wobei das/die Entladungsrohr(e) (44, 66) zur Oszillation um eine entsprechende vertikale Achse (Z) oder in der Nähe der vertikalen Richtung montiert ist/sind.

3. Vorrichtung nach Anspruch 1 oder Anspruch 2, umfassend eine Wasserverteilergruppe (25), wobei Waschleitungen (28, 98) mit der Verteilergruppe verbunden sind, um ausgewählten Komponenten der Vorrichtung (10) Waschwasser zuzuführen.

4. Vorrichtung nach einem der Ansprüche 1 bis 3, wobei das Entnahmesystem (62; 64, 66, 76) für das durch den Zentrifugaltrenner (22) ausgepackte Produkt mindestens eine Pumpe zum Entnehmen eines flüssigen ausgepackten Produkts und mindestens einen Schneckenförderer umfasst, der in ein Entladungsrohr (66) zum Entnehmen fester, körniger und/oder pastöser Produkte eingesetzt ist.

5. Vorrichtung nach einem der Ansprüche 1 bis 4, umfassend einen einzelnen elektrischen Energieeinlass von einer externen Quelle zu der elektrischen Schalttafel (21), wobei die gesamten Anschlüsse und internen Drähte auf der Trägerplattform (12) platziert sind.

6. Vorrichtung nach einem der Ansprüche 1 bis 5, wobei die Trägerplattform (12) auf Wägezellen (18), vorzugsweise an der Eingangsseite für die auszupackenden verpackten Produkte montiert ist.

7. Vorrichtung nach einem der Ansprüche 1 bis 6, wobei das Zufuhrsystem (90) zum Zuführen von verpackten Produkten zum Zentrifugaltrenner (22) ein Trichter (94) ist, der am Boden mit einem Paar Schneckenförderern (92) mit gegenüberliegenden schneckenförmigen Schraubengängen versehen ist, die sowohl für den Transport der verpackten Produkte zu dem Zentrifugaltrenner (22) als auch für ein erstes Aufreißen der Verpackungen sorgen.

8. Verfahren zum Betreiben einer Vorrichtung nach einem der Ansprüche 1 bis 7, umfassend die Schritte des Transportierens der gesamten Vorrichtung (10) zu dem Installationsort in einem einzigen Block, der auf der Trägerplattform (12) montiert ist, des Positionierens der Trägerplattform an dem vorbestimmten Ort, des Verbindens mindestens einer elektrischen Quelle mit der elektrischen Schalttafel (21), wobei der Transport der Vorrichtung (10) den einleitenden Schritt des Anordnens des/r Entladungsrohrs(e) (44, 66) in der Transportposition, in der es/sie innerhalb der Form der Trägerplattform, wenn von oben betrachtet, enthalten ist/sind, und den nachfolgenden Schritt des Anordnens des/r Entladungsrohrs(e) an dem vorbestimmten Installationsort in der Betriebsposition, in der es/sie aus der Form der Trägerplattform (12), wenn von oben betrachtet, hervorsteht/hervorstehen, umfasst.

9. Verfahren zum Steuern und Anweisen einer Vorrichtung nach einem der Ansprüche 1 bis 7, umfassend ein elektronisches Steuersystem, in das eine Betriebssoftware geladen wird, die konfiguriert ist, um die Vorrichtung anzuweisen und zu steuern, wobei vorbestimmte Betriebsrezepte bereitgestellt werden, von denen jedes die Betriebsfunktion der Elemente der Vorrichtung bestimmt, wobei das Verfahren den Schritt des Auswählens, welches automatisch oder manuell ist, eines Betriebsrezepts umfasst, das optimierte Vorgänge der Vorrichtung gemäß der Art des eingeführten verpackten Produkts anweist.

## Revendications

1. Appareil pour désemballer des produits emballés, comprenant une plateforme de support (12) sur laquelle est monté un séparateur centrifuge (22) étant configuré pour déchirer les emballages des produits emballés, en les séparant des produits qui y sont emballés, les éléments suivants étant en outre montés sur la plateforme de support :
- un système d'alimentation (90) pour alimenter le séparateur centrifuge (22) en produits emballés,
- un système de retrait (62 ; 64, 66, 76) pour retirer de l'appareil le produit désemballé au moyen du séparateur centrifuge (22)
- un système d'évacuation (38, 44) permettant d'évacuer de l'appareil les emballages déchirés par le séparateur centrifuge (22),
- un tableau électrique (21) pour commander et contrôler l'appareil (10) à l'aide de câbles électriques correspondants,
la plateforme de support (12) supportant entièrement l'appareil pour son transport et son fonctionnement sur un site d'installation, le système de retrait du produit désemballé et/ou le système d'évacuation des emballages déchirés comprenant un ou des tubes d'évacuation (44, 66) étant mobile(s) d'une position de transport, dans laquelle le ou les tubes est/sont contenu(s) dans la forme de la plateforme de support lorsqu'elle est vue du dessus, à une position de fonctionnement, dans laquelle il/ils dépasse(nt) de la forme de la plateforme de support (12) lorsqu' elle est vue du dessus.

2. Appareil selon la revendication 1, le(s) tube(s) d'évacuation (44, 66) étant monté(s) pour osciller autour d'un axe vertical correspondant (Z) ou à proximité de la direction verticale.

3. Appareil selon la revendication 1 ou la revendication 2, comprenant un groupe distributeur d'eau (25), les tuyaux de lavage (28, 98) étant raccordés au groupe distributeur afin de fournir de l'eau de lavage à des composants sélectionnés de l'appareil (10).

4. Appareil selon l'une quelconque des revendications 1 à 3, le système de retrait (62 ; 64, 66, 76) du produit étant désemballé par le séparateur centrifuge (22) comprenant au moins une pompe pour retirer un produit désemballé liquide et au moins un convoyeur à vis étant inséré dans un tube d'évacuation (66) pour retirer les produits solides, granuleux et/ou pâteux.

5. Appareil selon l'une quelconque des revendications 1 à 4, comprenant une seule arrivée d'énergie électrique provenant d'une source extérieure vers le panneau électrique (21), l'ensemble des connexions et des fils internes étant placés sur la plateforme de support (12).

6. Appareil selon l'une quelconque des revendications 1 à 5, la plateforme de support (12) étant montée sur des cellules de charge (18), de préférence du côté de l'entrée des produits emballés à désemballer.

7. Appareil selon l'une quelconque des revendications 1 à 6, le système d'alimentation (90) destiné à alimenter en produits emballés le séparateur centrifuge (22) étant une trémie (94) qui est pourvue au fond d'une paire de convoyeurs à vis (92) avec des trajectoires hélicoïdales opposées qui assurent à la fois le transport des produits emballés vers le séparateur centrifuge (22) et un premier déchirement des emballages.

8. Procédé de fonctionnement d'un appareil selon l'une quelconque des revendications 1 à 7, comprenant les étapes consistant à transporter l'appareil entier (10) vers le site d'installation en un seul bloc, qui est monté sur la plateforme de support (12), positionner la plateforme de support sur le site prédéterminé, brancher au moins une source électrique au panneau électrique (21), le transport de l'appareil (10) comprenant l'étape préliminaire consistant à disposer le(s) tube(s) d'évacuation (44, 66) dans la position de transport, dans laquelle il/ils est/sont contenu(s) dans la forme de la plateforme de support lorsqu'elle est vue de dessus, et l'étape ultérieure consistant à disposer, sur le site d'installation prédéterminé, le(s) tube(s) d'évacuation dans la position de fonctionnement dans laquelle il/ils fait/font saillie par rapport à la forme de la plateforme de support (12) lorsqu'elle est vue de dessus.

9. Procédé de contrôle et de commande d'un appareil selon l'une quelconque des revendications 1 à 7, comprenant un système de commande électronique dans lequel est chargé un logiciel d'exploitation configuré pour commander et contrôler l'appareil, dans lequel sont fournies des recettes d'opération prédéterminées, chacune d'elles déterminant la fonction opérationnelle des éléments de l'appareil, le procédé comprenant l'étape de sélection, étant automatique ou manuelle, d'une recette d'opération qui commande des opérations optimisées de l'appareil en fonction du type de produit emballé introduit.
